# FASCICULE DE BREVET EUROPEEN

(11) **EP 2 801 058 B1**
(45) Date de publication et mention de la délivrance du brevet: **10.02.2016**
(21) Numéro de dépôt: 12806598.4
(22) Date de dépôt: 29.11.2012
(51) Int. Cl.: H04B 5/00, G06K 19/077

(54) **PROCEDE DE COMMUNICATION ENTRE UNE CARTE NFC A DOUBLE INTERFACE A CONTACT ET SANS CONTACT INSEREE DANS UN TERMINAL NFC, ET UN DISPOSITIF NFC**
VERFAHREN ZUR KOMMUNIKATION ZWISCHEN EINER NFC KARTE MIT DOPPELKONTAKT- UND KONTAKTLOSER SCHNITTSTELLE IN EINEM NFC-ENDGERÄT UND EINER NFC-VORRICHTUNG
METHOD OF COMMUNICATION BETWEEN A DUAL CONTACT AND CONTACTLESS INTERFACE NFC CARD INSERTED IN AN NFC TERMINAL, AND AN NFC DEVICE

(30) Priorité: 03.01.2012 FR 1250049
(43) Date de publication de la demande: 12.11.2014
(73) Titulaire: Inside Secure, 13590 Meyreuil (FR)
(72) Inventeur: CHARRAT, Bruno, F-13090 Aix En Provence (FR)
(74) Mandataire: de Roquemaurel, Bruno
(86) Numéro de dépôt international: PCT/FR2012/052755
(87) Numéro de publication internationale: WO 2013/102712

(56) Documents cités:
- EP-A1- 2 172 877
- WO-A1-99/21119
- FR-A1- 2 897 704

## Description

La présente invention concerne les cartes NFC (Near Field Communication), et plus particulièrement les cartes NFC destinées à être insérées dans un terminal tel qu'un téléphone mobile. La présente invention concerne également un procédé permettant d'établir une communication sans contact ou à champ proche entre une carte NFC et un dispositif NFC externe.

Pour permettre à un téléphone mobile ne comportant pas d'interface de communication sans contact de communiquer avec un dispositif NFC externe, on a mis au point des cartes NFC à double interface à contact et sans contact, destinées à être insérées dans le téléphone. Ces cartes sont par exemple de type carte UICC (Universal Integrated Circuit Card) tel que SIM-NFC (Subscriber Identity Module), ou du type SD-NFC (Secure Digital). Il a déjà été proposé une carte SIM-NFC comprenant des plages de contact, un microprocesseur, un module NFC, et une bobine d'antenne. Cette carte peut effectuer des communications à contact avec le téléphone portable par les plages de contact et une communication NFC avec un dispositif NFC externe par la bobine d'antenne.

Lorsque la carte et le dispositif NFC externe sont placés suffisamment près l'un de l'autre, la bobine d'antenne de la carte est couplée inductivement à une bobine d'antenne du dispositif NFC externe, et des données peuvent être échangées en utilisant des techniques NFC classiques telles que celles définies par les normes ISO 14443, ISO 15693, et Sony Felica®.

Dans la plupart des applications, le dispositif externe émet un champ magnétique alors que la carte NFC est passive et envoie des données par modulation de charge. A cet effet, la bobine d'antenne de la carte est associée à des composants passifs (ex. condensateurs) pour former un circuit d'antenne accordé à une fréquence de fonctionnement du dispositif externe, par exemple 13,56 MHz.

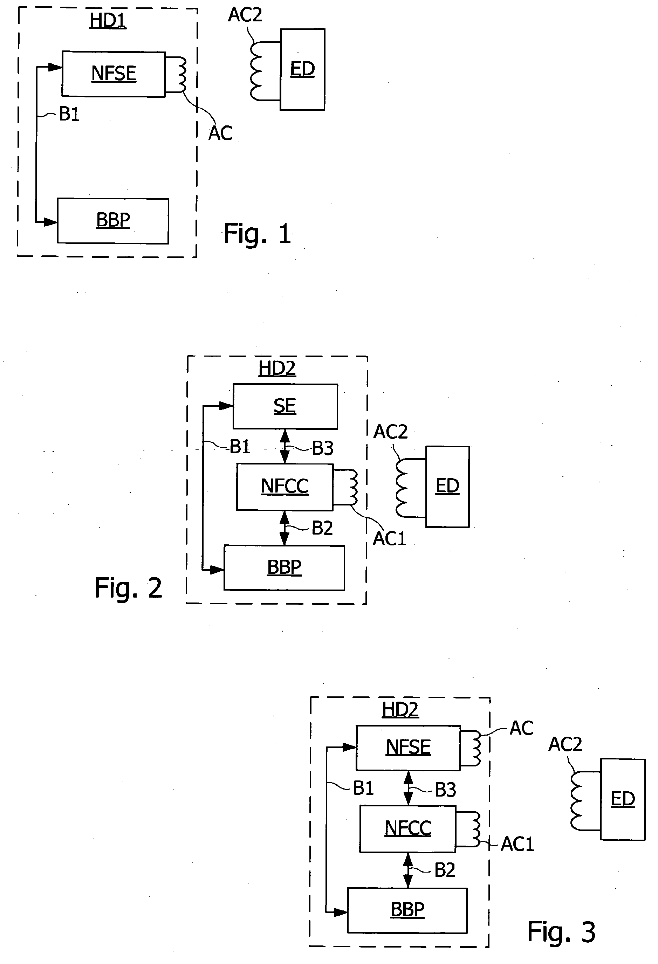

La figure 1 représente schématiquement un terminal portatif HD1 comprenant un processeur principal BBP. Une carte NFC référencée NFSE est insérée dans le terminal HD1 et reliée par une interface à contact et une liaison électrique B1 au processeur BBP. La carte NFSE comporte un circuit d'antenne AC pour communiquer avec un dispositif NFC externe ED. La liaison B1 peut être conforme à la norme ISO 7816.

Cette solution n'est guère satisfaisante car les terminaux portatifs contiennent généralement des parties métalliques ou des composants métalliques, par exemple une carte de circuit imprimé. Lorsqu'une carte NFC est insérée dans un tel terminal, ces parties ou ces composants métalliques réduisent l'inductance de la bobine d'antenne, altérant ainsi la fréquence d'accord du circuit d'antenne et réduisant la distance de communication maximale entre la carte NFC et le dispositif externe ED.

Il est difficile pour les fabricants de cartes NFC de prévoir dans quelles conditions une carte NFC sera utilisée, c'est-à-dire quel sera l'environnement métallique de la carte et comment la carte NFC sera agencée par rapport à la carte de circuit imprimé, notamment, si son axe longitudinal sera parallèle ou perpendiculaire à un bord de la carte de circuit imprimé. L'emplacement de la carte peut varier significativement d'un terminal à un autre. L'emplacement peut être plus ou moins protégé électromagnétiquement, et le terminal peut comprendre un nombre variable de parties métalliques à proximité de la carte. Par conséquent, la distance de communication maximale possible depuis la carte dépend largement de l'environnement de la carte et peut varier significativement en fonction du terminal dans lequel la carte est insérée. De plus, le champ magnétique émis par le dispositif externe induit des courants de Foucault dans les parties métalliques, qui créent un contre-champ magnétique tendant à neutraliser le champ magnétique, réduisant ainsi d'autant plus la distance de communication maximale entre la carte NFC et le dispositif externe.

Il existe également des téléphones mobiles équipés d'un module NFC pour communiquer avec un dispositif NFC externe. Dans ce cas, il n'est pas nécessaire que la carte SIM insérée dans le téléphone comporte une interface sans contact. Ainsi, la figure 2 représente schématiquement un terminal HD2 comprenant un processeur principal BBP et un module NFC référencé NFCC connecté à un circuit d'antenne AC1 et relié par une liaison B2 au processeur BBP. Une carte SIM référencée SE, est insérée dans le terminal dans lequel elle est reliée par une interface à contact et une liaison électrique B1 au processeur BBP. La carte SIM peut également être reliée au module NFC par l'intermédiaire d'une liaison B3.

Cette solution présente l'avantage d'offrir pour les communications sans contact un circuit d'antenne, en l'occurrence le circuit AC1, qui peut être installé dans le terminal et adapté en fonction des pièces métalliques présentes dans ce dernier. Le circuit d'antenne AC1 peut donc offrir une distance de communication maximale.

Cependant, les utilisateurs du terminal HD2 peuvent être amenés à insérer dans leur terminal une carte possédant sa propre interface sans contact, telle que la carte NFSE de la figure 1. Ce cas présenté schématiquement en figure 3, peut apparaître notamment lorsqu'un utilisateur possédant déjà une carte SIM-NFC achète un nouveau téléphone disposant de son propre module NFC. Il en résulte que lorsque le terminal est présenté à proximité d'un dispositif NFC externe, il peut apparaitre un conflit entre la carte NFSE et le module NFCC. En effet, la carte NFSE et le module NFCC peuvent être sollicités simultanément par un dispositif NFC externe qui verra dans son champ deux dispositifs NFC distincts.

Pour résoudre ce problème, il est proposé dans le document WO 2011/079606, d'adapter le processeur principal BBP du terminal pour qu'il envoie à la carte SIM-NFC une commande de commutation pour qu'elle n'utilise pas son interface NFC au profit de celle du terminal ou du module NFC, pour effectuer des communications sans contact. Cette solution implique également que les fabricants de téléphones mobiles et les fabricants de cartes SIM-NFC qui sont différents, s'entendent sur la définition et le traitement de telles commandes de commutation.

En outre, l'interface sans contact de la carte SIM-NFC peut dans certains cas offrir une distance de communication supérieure à celle du module NFCC. Il peut alors être préférable d'utiliser l'interface de communication qui présente la plus grande distance de communication. Or il n'est pas possible de prévoir quelle interface sans contact aura la distance de communication la plus grande. En effet, celle de l'interface sans contact de la carte NFSE dépend de sa position dans le terminal HD2 et de la configuration des pièces métalliques présentes dans le terminal HD2, qui sont essentiellement variables d'un modèle de terminal à l'autre. Par ailleurs, la carte NFSE peut engager une communication avec un dispositif NFC externe ED sans faire intervenir le processeur BBP. Celui-ci n'est donc pas en mesure de déterminer l'interface sans contact présentant la distance de communication la plus grande, et donc de sélectionner une interface sans contact sur la base de la distance de communication.

Par ailleurs, si la carte NFSE est configurée pour engager ou répondre à une demande de communication sans contact en utilisant sa propre interface sans contact, le module NFCC ne doit pas répondre aux signaux qu'il reçoit par son interface sans contact, afin d'éviter des conflits.

Il peut donc être souhaitable de mettre en oeuvre un procédé de communication à champ proche entre un terminal comportant un module NFC et une carte SIM-NFC et un dispositif NFC externe, en évitant les risques de conflits entre le module NFC et la carte SIM-NFC. Il peut être également souhaitable de pouvoir choisir l'interface de communication à champ proche présentant la plus grande distance de communication ou la meilleure qualité. Il peut être également souhaitable que ce procédé de communication reste compatible avec un terminal équipé d'une carte SIM, mais ne comportant qu'une seule interface sans contact prévue, soit dans la carte SIM insérée dans le terminal, soit dans un module NFC du terminal.

Des modes de réalisation concernent un procédé de communication sans contact entre une carte NFC à double interface à contact et sans contact, installée dans un terminal de communication, et un dispositif NFC externe, le terminal comprenant un module NFC couplé à l'interface à contact de la carte et comportant une interface de communication sans contact, le procédé comprenant des étapes de :
détection par la carte de la présence du module NFC connecté à son interface à contact, sélection par la carte de l'une ou l'autre des interfaces à contact et sans contact de la carte, en fonction du résultat de la détection de la présence du module NFC, et transmission de signaux entre la carte et le dispositif NFC par l'interface sélectionnée, et si l'interface à contact de la carte est sélectionnée, par l'interface sans contact du module NFC. Selon un mode de réalisation, si l'interface à contact de la carte est sélectionnée, la carte garde active son interface sans contact et reste à l'écoute de son interface sans contact pour pouvoir recevoir et utiliser des données échangées entre le module NFC et le dispositif NFC externe.

Selon un mode de réalisation, l'interface à contact de la carte est couplée au module NFC par une liaison filaire de type SWP, et la carte détecte la présence du module NFC connecté à son interface à contact en recevant un signal d'activation du module NFC par la liaison filaire.

Selon un mode de réalisation, la carte active la liaison filaire en transmettant sur la liaison filaire au module NFC, un signal de réponse au signal d'activation.

Selon un mode de réalisation, si la carte détecte la présence du module NFC connecté à son interface à contact, la carte active une liaison filaire reliant son interface à contact au module NFC.

Selon un mode de réalisation, si la carte détecte la présence du module NFC connecté à son interface à contact, la carte compare des données transmises au module NFC avec des données transmises par le module NFC vers un dispositif NFC externe et comparer des données que lui transmet le module NFC avec des données émises par le dispositif NFC externe.

Selon un mode de réalisation, si la carte détecte la présence du module NFC, la carte reçoit des données d'un dispositif NFC externe, et si le module NFC ne lui transmet pas dans un premier délai les données reçues du dispositif externe, émet des données en réponse aux données reçues vers le dispositif NFC externe par son interface sans contact, et sinon, transmet les données en réponse au module NFC par son interface à contact, le module NFC transmettant les données en réponse au dispositif NFC externe par son interface sans contact.

Selon un mode de réalisation, si la carte détecte la présence du module NFC, la carte émet des données en réponse à des données reçues d'un dispositif NFC externe par son interface sans contact, tandis que le module NFC reste à l'écoute de son interface sans contact pour transmettre les données reçues du dispositif NFC externe à la carte si la carte n'a pas émis de données en réponse au dispositif NFC dans un second délai.

Selon un mode de réalisation, si la carte détecte la présence du module NFC, la carte n'active pas la liaison filaire, tandis que le module NFC retransmet des données reçues d'un dispositif NFC externe, à un processeur du terminal, connecté au module NFC, et retransmet des données reçues du processeur au dispositif NFC.

Selon un mode de réalisation, si la carte détecte la présence du module NFC, la carte n'active pas la liaison filaire, et transmet des données par son interface sans contact au module NFC qui retransmet ces données à un processeur du terminal connecté au module NFC, et le module NFC retransmet par son interface sans contact à la carte, des données reçues du processeur.

Selon un mode de réalisation, la carte comprend un circuit d'antenne comportant au moins une bobine d'antenne présentant un axe magnétique, et au moins un écran électriquement conducteur s'étendant à proximité de la bobine d'antenne, l'axe magnétique de la bobine d'antenne étant sensiblement parallèle au plan de la carte et ne traversant pas chaque écran conducteur, et si la carte émet des données, elle émet des salves de champ magnétique à l'aide de la bobine d'antenne afin de compenser des effets négatifs de chaque écran conducteur sur la distance maximale de d'émission de données par modulation de charge.

Des modes de réalisations peuvent également concerner un terminal comprenant un module NFC et une carte à double interface à contact et sans contact, le module NFC étant couplé à l'interface à contact de la carte et comportant une interface sans contact, le module NFC et la carte étant configurés pour mettre en oeuvre le procédé précédemment défini.

Selon un mode de réalisation, la carte comprend un circuit d'antenne comprenant au moins une bobine d'antenne présentant un axe magnétique, un circuit intégré relié au circuit d'antenne, et au moins un écran électriquement conducteur s'étendant à proximité de la bobine d'antenne, l'axe magnétique de la bobine d'antenne étant sensiblement parallèle au plan de la carte, et ne traversant pas l'écran conducteur, aucun matériau magnétiquement perméable étant disposé entre l'écran conducteur et la bobine d'antenne.

Selon un mode de réalisation, la carte comprend un circuit d'antenne comprenant au moins une bobine d'antenne présentant un axe magnétique, et un circuit intégré relié au circuit d'antenne, l'axe magnétique de la bobine d'antenne étant sensiblement parallèle au plan de la carte, et formant un angle de 45° ± 25° par rapport à un axe longitudinal de la carte.

Selon un mode de réalisation, le circuit d'antenne de la carte présente une fréquence d'accord qui a été réglée en présence de l'écran conducteur, et qui ne se désaccorde pas lorsqu'un élément métallique est placé à proximité de l'écran conducteur.

Selon un mode de réalisation, la bobine d'antenne de la carte est enroulée autour d'un coeur magnétiquement perméable.

Selon un mode de réalisation, le terminal comprend un processeur relié à la carte par une liaison ISO 7816, la carte étant couplée au module NFC par une liaison SWP.

Des exemples de réalisation de l'invention seront décrits dans ce qui suit, à titre non limitatif en relation avec les figures jointes parmi lesquelles :
la figure 1 décrite précédemment représenté schématiquement un terminal dans lequel une carte SIM-NFC est insérée,
la figure 2 décrite précédemment représente schématiquement un terminal comprenant un module NFC, et dans lequel une carte SIM est insérée,
la figure 3 décrite précédemment représente schématiquement un terminal comprenant un module NFC, et dans lequel une carte SIM-NFC est insérée,
les figures 4 à 7 représentent des séquences d'étapes exécutées par un contrôleur NFC et une carte SIM-NFC, installés dans un terminal, selon divers modes de réalisation,
la figure 8 représente schématiquement la structure interne d'une carte SIM-NFC, selon un mode de réalisation,
les figures 9 et 10 sont des vues de face et en coupe longitudinale de la carte présentée en figure 8,
la figure 11 représente schématiquement des circuits internes de la carte présentée en figure 8,
la figure 12 représente schématiquement la structure interne d'une carte SIM-NFC, selon un autre mode de réalisation.

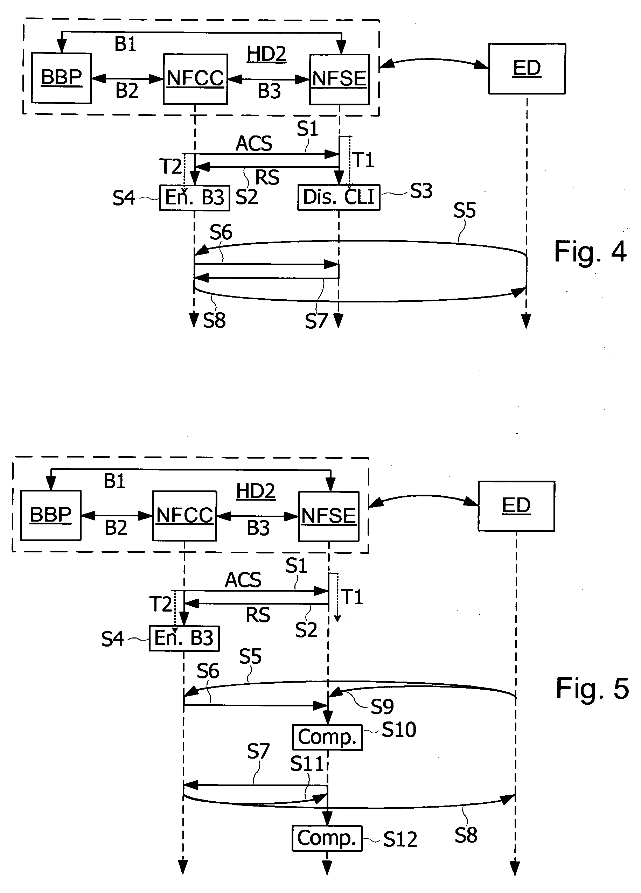

Les figures 4 à 7 représentent des séquences d'étapes d'initialisation et de communication avec un dispositif NFC externe ED, exécutées par un module NFC référencé NFCC et une carte NFC référencée NFSE, installés dans le terminal HD2. La carte NFSE peut être une carte SIM-NFC destinée à être insérée dans un téléphone mobile.

Dans un mode de réalisation illustré par la figure 4, le module NFCC et la carte NFSE exécutent une procédure d'initialisation comprenant des étapes S1 à S3. A l'étape S1, le module NFCC émet sur la liaison B3 un signal d'activation ACS et déclenche une temporisation T2. L'étape S1 peut être déclenchée à la mise sous tension du module NFCC. De son coté, la carte NFSE déclenche une temporisation T1 à sa mise sous tension à l'étape S2. Si elle ne reçoit pas de signal d'activation sur la liaison B3 avant la fin de la temporisation T1, elle considère qu'elle n'est pas connectée à un module NFC.

De cette manière, la carte NFSE peut déterminer si elle est ou non connectée à un module NFC capable d'assurer une communication à champ proche avec un lecteur externe, c'est-à-dire si elle est insérée dans un terminal du type HD2 (figure 2 ou 3), ou dans un terminal du type HD1 (figure 1). La carte NFSE peut alors décider de répondre au signal d'activation en émettant un signal de réponse RS indiquant qu'elle est prête à échanger des données (étape S2), ou alors de ne pas répondre à ce signal. La carte NFSE peut également décider de maintenir active ou de désactiver son interface sans contact. Si la carte NFSE répond au signal d'activation (étape S2) avant la fin de la temporisation T2, le module NFCC peut déterminer qu'il est connecté à une carte SIM avec ou sans interface sans contact.

Dans le mode de réalisation illustré par la figure 4, la carte NFSE répond au signal d'activation ACS émis par le module NFCC, et désactive son interface sans contact CLI à l'étape S3. De cette manière, si la carte NFSE détecte la présence du module NFCC, elle utilise l'interface sans contact du module NFCC au lieu d'utiliser sa propre interface sans contact. Le module NFCC se met alors dans un mode dans lequel la liaison B3 est activée à l'étape S4. Dans ce mode, les étapes S5 à S8 peuvent être exécutées. A l'étape S5, le module NFCC reçoit des données par son interface sans contact d'un dispositif NFC externe ED. A l'étape S6, le module NFCC retransmet les données reçues sur la liaison B3 vers la carte NFSE. Le module NFCC retransmet également vers son interface sans contact (étape S8), des données reçues de la carte NFSE par la liaison B3 à l'étape S7.

Dans un autre mode de réalisation, la carte NFSE répond systématiquement au signal d'activation ACS émis par le module NFCC, mais active ou garde activée son interface sans contact CLI. La carte NFSE peut ainsi recevoir des données d'un dispositif NFC externe ED avant que le module NFC lui retransmette ces mêmes données qu'il a également reçues par son interface sans contact. La carte NFSE peut alors préparer une réponse à ces données avant de recevoir ces dernières du module NFCC.

Dans un autre mode de réalisation illustré par la figure 5, la carte NFSE répond systématiquement au signal d'activation ACS, active ou garde activée son interface sans contact CLI. Dans ce mode de réalisation, la carte NFSE communique avec un dispositif NFC externe ED par l'intermédiaire du module NFCC, et grâce à son interface sans contact restée active, écoute les données échangées entre le module NFCC et le dispositif ED. Ainsi, les étapes S5 et S6 sont exécutées en parallèle d'une étape S9 de réception par la carte NFSE sur son interface sans contact CLI des données transmises par le dispositif ED. Ensuite, la carte NFSE exécute une étape S10 où elle compare les données reçues à l'étape S6 avec les données reçues à l'étape S9. De même, les étapes S7, S8 sont exécutées en parallèle d'une étape S11 de réception par la carte NFSE sur son interface sans contact CLI des données transmises par le module NFCC à l'étape S8. Ensuite, la carte NFSE exécute une étape S12 où elle compare les données émises à l'étape S7 avec les données reçues à l'étape S11. Si une incohérence est ainsi détectée entre les données que la carte NFSE reçoit ou transmet au module NFCC, et celles qu'elle reçoit de son interface sans contact, elle se place dans un mode d'erreur.

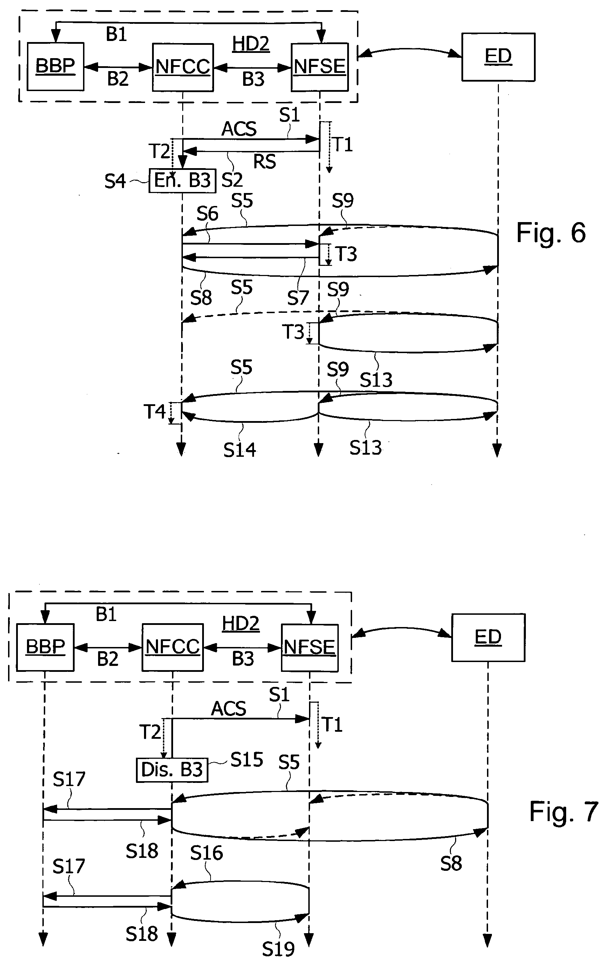

Dans d'autres modes de réalisation illustrés par la figure 6, la carte NFSE répond systématiquement au signal d'activation ACS, et active ou garde activée son interface sans contact CLI. Dans un mode de réalisation, les interfaces sans contact du module NFCC et de la carte NFSE sont actives pour sélectionner l'interface sans contact la plus performante ou celle qui capte les données transmises par un dispositif NFC externe. Ces données peuvent être reçues par l'interface sans contact du module NFCC à l'étape S5, et par l'interface sans contact CLI de la carte NFSE à l'étape S9.

Si seul le module NFCC reçoit ces données par son interface sans contact, ces données sont retransmises à l'étape S6 par le module NFCC par la liaison B3 à la carte NFSE. La carte NFSE répond alors aux données ainsi reçues en utilisant la liaison B3 à l'étape S7, et le module NFCC retransmet la réponse reçue de la carte NFSE par son interface sans contact vers le dispositif ED à l'étape S8.

Si le module NFCC ne reçoit pas les données émises par le dispositif ED, par exemple avant la fin d'une temporisation T3 déclenchée par la carte NFSE à la réception des données à l'étape S9, la carte NFSE répond à ces données à l'étape S13 en utilisant son interface CLI.

Si les interfaces sans contact du module NFCC et de la carte NFSE reçoivent toutes deux les données émises par le dispositif ED, les étapes S10 à S 12 (figure 5) peuvent être exécutées par la carte NFSE. Dans un autre mode de réalisation illustré par la figure 6, la priorité est donnée à la carte NFSE. A cet effet, le module NFCC déclenche une temporisation T4 à la réception de données émises par le dispositif ED (étape S5), et se met à l'écoute de son interface sans contact. Si avant la fin de la temporisation T4, le module NFCC détecte à l'étape S 14 que la carte NFSE a répondu au dispositif ED à l'étape S13, il n'exécute pas les étapes S6 et S8.

Dans un autre mode de réalisation illustré par la figure 7, la carte NFSE ne transmet pas le signal de réponse RS au signal d'activation ACS au module NFCC par la liaison B3 avant la fin de la temporisation T2. Le module NFCC se met alors dans un mode où il considère qu'il n'est pas connecté à une carte SIM (étape S15). Par ailleurs, la carte NFSE garde son interface sans contact CLI active. Ainsi, le terminal HD2 dispose de deux interfaces de communication à champ proche ou sans contact actives simultanément. Dans ce cas, le module NFCC transmet les données reçues par son interface sans contact à l'étape S5 au processeur BBP par la liaison B2 (étape S 17), et transmet vers son interface sans contact (étape S8) les données émises par le processeur BBP par la liaison B2 à l'étape S18 en réponse aux données émises par le dispositif ED à l'étape S5.

Par ailleurs, la carte NFSE peut communiquer avec le processeur BBP par l'intermédiaire de son interface sans contact CLI. Ainsi, les données émises par l'interface sans contact de la carte NFSE (étape S 16) sont reçues par l'interface sans contact du module NFCC et retransmises par la liaison B2 au processeur BBP (étape S17). Réciproquement, les données émises par le processeur BBP (étape S18) en réponse aux données reçues à l'étape S16, sont retransmises par l'interface sans contact du module NFCC et peuvent ainsi être captées par l'interface sans contact CLI de la carte NFSE (étape S 19). Le module NFCC fonctionne alors dans un mode lecteur NFC.

Dans un mode de réalisation, la carte NFSE communique avec le processeur BBP (liaison B1) conformément au protocole ISO 7816, et avec le module NFCC (liaison B3) conformément au protocole SWP (Single Wire Protocol - Cf. ETSI TS 102613).

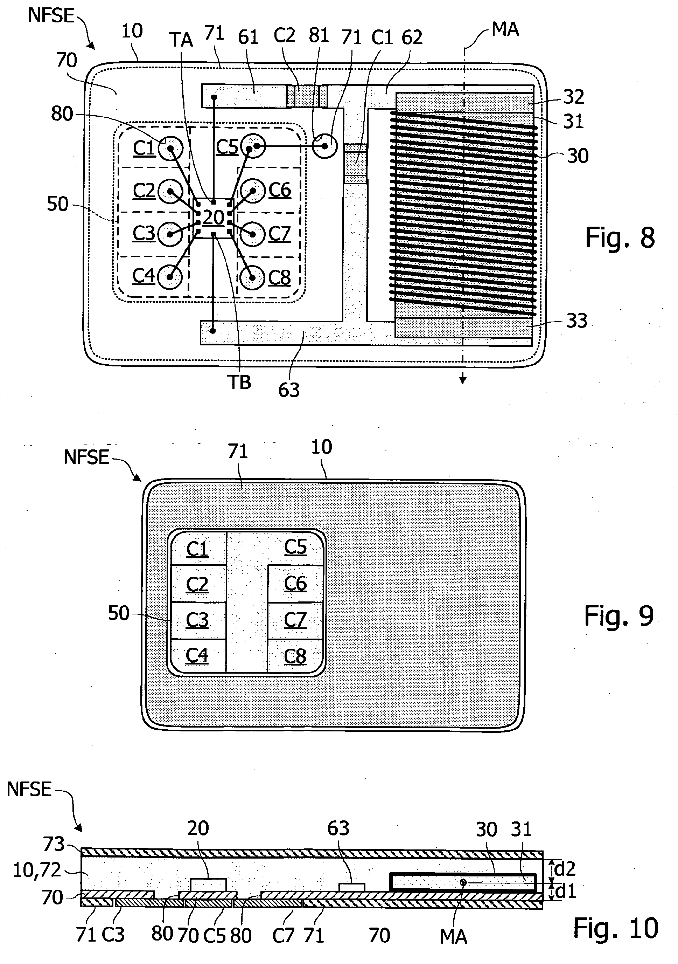

Les figures 8, 9, 10 sont respectivement des vues interne de dessus, de dessous et en coupe de la carte NFSE, selon un mode de réalisation. La carte NFSE comprend un corps en plastique 10, un circuit intégré 20, un circuit d'antenne accordé comportant une bobine d'antenne 30 et des condensateurs d'accord C1, C2, et un groupe 50 de plages de contact (en pointillés sur la figure 8). Le circuit intégré 20 est un dispositif double à contact/sans contact et est conçu pour effectuer des communications à contact ou sans contact. Le circuit intégré 20 peut être un circuit intégré sécurisé pour une carte SIM-NFC.

Le groupe 50 de plages de contact comprend huit contacts ISO 7816 classiques C1 (Vcc), C2 (RST), C3 (CLK), C4 (RFU), C5 (GND), C6 (Vpp), C7 (I/O), et C8 (RFU), auxquels les bornes du circuit intégré 20 sont reliées. Le circuit intégré 20 comprend des bornes de connexion supplémentaires TA, TB reliées à la bobine d'antenne 30 et aux condensateurs C1, C2.

La bobine d'antenne 30 présente plusieurs enroulements coaxiaux non coplanaires et un axe magnétique MX sensiblement parallèle au plan de la carte. L'expression "sensiblement parallèle au plan de la carte" signifie que l'axe magnétique MX est au moins parallèle à la face supérieure ou inférieure du corps 10, en supposant que la face supérieure ou inférieure de la carte est plate, et avec une précision qui dépend du processus de fabrication de la carte, par exemple ± 10°. La bobine d'antenne 30 peut être enroulée autour d'un coeur magnétiquement conducteur 31, et le coeur peut être en un matériau hautement perméable tel que la ferrite.

Dans un mode de réalisation, la carte NFSE comprend également au moins un écran électriquement conducteur, ici deux écrans. Un premier écran 71 (figures 8, 9, 10) est agencé sous la bobine d'antenne 30 à une distance d1 de son axe magnétique. Un second écran 73 (figure 10) est agencé sur la bobine d'antenne 30 à une distance d2 de son axe magnétique. Aucun matériau magnétiquement conducteur, en particulier de la ferrite, n'est agencé entre la bobine d'antenne et les écrans conducteurs 71, 73.

Dans le mode de réalisation illustré sur les figures 8 à 10, les premier et second écrans conducteurs 71, 73 sont sensiblement planaires et de préférence orientés de telle sorte qu'ils sont sensiblement parallèles à l'axe magnétique MX de la bobine d'antenne 30. L'expression "sensiblement parallèles" signifie que les écrans sont parallèles à l'axe magnétique MX avec une précision qui dépend du processus de fabrication de la carte, par exemple ± 10°. Les écrans conducteurs 71, 73 s'étendent respectivement sur les faces inférieure et supérieure de la carte et couvrent presque entièrement les surfaces des faces supérieure et inférieure. Chaque écran 71, 73 présente une épaisseur qui dans certains modes de réalisation peut être au moins égale à l'épaisseur de peau à la fréquence d'accord du circuit d'antenne, par exemple approximativement 18 µm pour une fréquence d'accord de 13,56 MHz. Dans un mode de réalisation, au moins un écran par exemple l'écran 71, est connecté au potentiel de masse du circuit intégré.

En règle générale, concernant l'orientation des écrans conducteurs par rapport à l'axe magnétique MX de la bobine d'antenne, les écrans conducteurs doivent être agencés de telle sorte qu'ils ne traversent pas l'axe magnétique. Cette règle paraît évidente lorsque les écrans 71, 73 sont planaires et orientés de telle sorte qu'ils sont sensiblement parallèles à l'axe magnétique MX.

Le circuit d'antenne comprenant la bobine d'antenne 30 et les condensateurs d'accord C1, C2, est accordé à une fréquence de fonctionnement spécifique, par exemple 13,56 MHz tel que requis par les normes ISO 14443, ISO 15693, et Sony Felica®. L'accord s'effectue en présence des écrans 71, 73. Les écrans 71, 73 protègent le circuit d'antenne accordé de l'influence de désaccord que des parties métalliques peuvent avoir sur la fréquence d'accord une fois que la carte est agencée dans un dispositif portatif tel qu'un téléphone mobile.

En d'autres termes, étant donné que l'environnement métallique de la carte NFSE n'est généralement pas connu à l'avance et dépend du dispositif dans lequel la carte est insérée, les écrans 71, 73 permettent de créer une perturbation métallique connue fixe à proximité de la bobine d'antenne 30. Il est donc possible d'accorder le circuit d'antenne puisque la perturbation métallique de l'antenne est fixe et ne dépend pas du dispositif dans lequel la carte est insérée. Par conséquent, les écrans conducteurs 71, 73, s'ils sont prévus, créent une "perturbation volontaire" du circuit d'antenne qui est prise en compte lorsque le circuit d'antenne est accordé, et qui prévaudra sur les perturbations des parties métalliques du dispositif dans lequel la carte NFSE sera insérée.

Dans le mode de réalisation illustré sur les figures 8 à 10, la carte NFSE est réalisée à partir d'une carte de circuit imprimé (PCB) comprenant un substrat diélectrique 70 électriquement isolant, et des couches électriquement conductrices supérieure et inférieure agencées sur les faces supérieure et inférieure du substrat 70. La couche conductrice inférieure est gravée pour former le groupe 50 de plages de contact C1-C8 et l'écran 71, lesquels sont isolés l'un de l'autre par des espacements. La couche conductrice supérieure est gravée pour former des pistes conductrices 61, 62,63.

La borne TA du circuit intégré 20 est reliée par fil à la piste conductrice 61. La borne TB du circuit intégré 20 est reliée par fil à la piste conductrice 63. D'autres bornes du circuit intégré sont reliées par fil aux plages de contact C1-C8 par des ouvertures 80 pratiquées dans le substrat 70. Optionnellement, le premier écran conducteur 71 est relié par fil à la plage de masse C5, à l'aide d'un fil passant par une ouverture supplémentaire 81 dans le substrat 70, puis passant par l'une des ouvertures 80 vers la plage de contact C5.

Le condensateur C1 présente une première borne connectée à la piste conductrice 62 et une seconde borne connectée à la piste conductrice 63. Le condensateur C2 présente une première borne connectée à la piste conductrice 61 et une seconde borne connectée à la piste conductrice 62. La bobine d'antenne 30 présente une première borne 32 connectée à la piste conductrice 62 et une seconde borne 33 connectée à la piste conductrice 63. Le condensateur C1 est par conséquent connecté en parallèle avec la bobine d'antenne 30 et le condensateur C2 est connecté en série entre la première borne 32 de la bobine d'antenne et la borne TA du circuit intégré 20.

Le circuit intégré 20, la bobine d'antenne 30, les condensateurs C1, C2, et les fils de connexion sont encapsulés dans un matériau polymère 72 s'étendant sur le substrat 70, tel qu'une résine ou du polychlorure de vinyle (PVC), qui forme le corps 10 de la carte.

Le second écran conducteur 73 est formé ou déposé sur la face supérieure de la carte. Il peut se constituer d'une plaque métallique ou peut comprendre une ou plusieurs couches d'un matériau conducteur, par exemple une peinture conductrice.

Dans un mode de réalisation, la carte présente une épaisseur totale de 804 µm, le substrat 70 présente une épaisseur de 100 µm, chacun des écrans conducteurs 71, 73 présente une épaisseur de 18 µm, et la bobine d'antenne 30 et son coeur 31 présentent une épaisseur de 500 µm. La distance d1 entre le centre de la bobine d'antenne et le premier écran conducteur 71 est de 368 µm et la distance d2 entre le centre de la bobine d'antenne et le premier écran conducteur 71 est de 400 µm.

Selon un mode de réalisation, le circuit intégré 20 est configuré pour émettre des données sur son interface sans contact par couplage inductif au moyen d'un procédé de modulation de charge active. Ce procédé comprend une étape consistant à émettre, en présence d'un dispositif NFC externe émettant en continu un premier champ magnétique alternatif, des salves d'un second champ magnétique alternatif. De telles salves de champ magnétique sont perçues par le dispositif externe comme une modulation de charge passive. Cette technique a été proposé par le demandeur dans le brevet EP 1 327 222 (US 7 098 770B2), Cf. figures 4A à 4E, page 8, tableau 4, paragraphe 074.

En ce qui concerne l'envoi de données par la carte, le procédé de modulation de charge permet d'obtenir une distance de communication maximale satisfaisante malgré la présence des écrans conducteurs 71, 73.

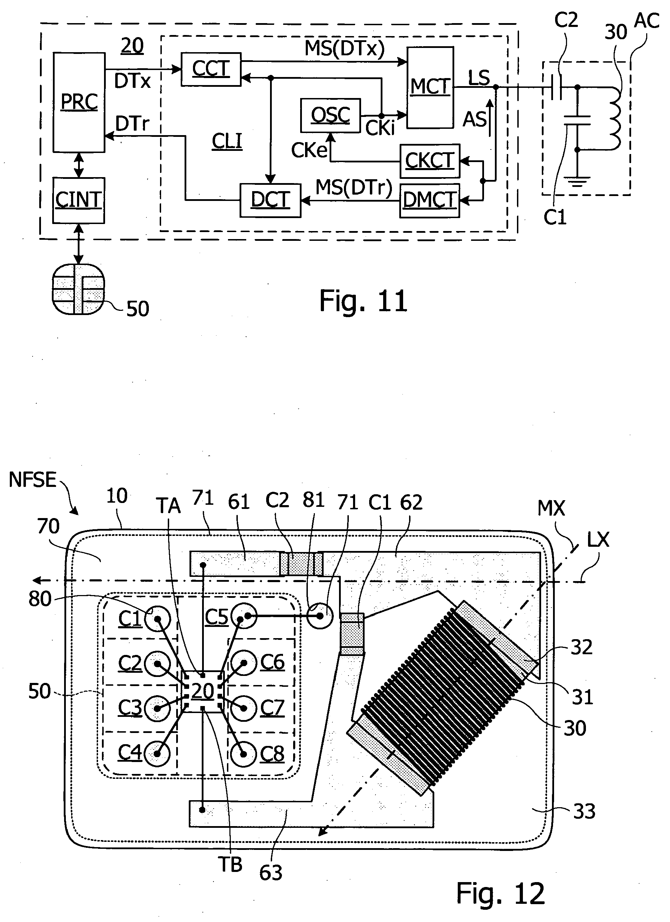

La figure 11 représente sous forme de blocs un exemple d'architecture du circuit intégré 20 mettant en oeuvre un procédé de modulation de charge active. Le circuit intégré 20 comprend une interface de communication à contact CINT, un processeur PRC, et une interface de communication sans contact CLI.

L'interface de communication à contact CINT est reliée au groupe 50 de plages de contact C1-C8 et présente des entrées/sorties connectées au processeur PRC. L'interface CINT assure la gestion de protocole et le codage/décodage de données lors d'une communication à contact entre le processeur PRC et un processeur externe, tel que le processeur de bande de base BBP d'un téléphone portable HD1, HD2 (figures 1, 3). L'interface CINT assure également la gestion de protocole et le codage/décodage de données lors d'une communication à contact entre le processeur PRC et le module NFCC du terminal HD2.

Dans un mode de réalisation, les contacts C1, C5 sont connectés respectivement à une source de tension et à la masse du terminal HD1, HD2. Le contact C2 est relié à une sortie d'un circuit de réinitialisation du terminal HD1, HD2. Le contact C3 est connecté à un circuit d'horloge du terminal HD1, HD2. Le contact C6 est connecté à une entrée/sortie de données du module NFCC et le contact C7 est connecté à une entrée/sortie de données du processeur BBP.

L'interface de communication sans contact CLI comprend un circuit de codage CCT, un circuit de décodage DCT, un circuit de modulation MCT, un circuit de démodulation DMCT, un circuit d'horloge CKCT, et un oscillateur synchrone OSC. L'interface de communication sans contact CLI comprend également le circuit d'antenne AC comportant les condensateurs C1, C2 et la bobine d'antenne 30 précédemment décrits.

Lors d'une communication sans contact avec un dispositif externe ED, ce dernier émet un champ magnétique oscillant à la fréquence de fonctionnement. Le processeur PRC fournit à l'interface sans contact CLI des données DTx à envoyer au dispositif externe ED, et traite des données DTr fournies par l'interface sans contact, reçues du dispositif externe.

Lors d'une telle communication sans contact, un signal d'antenne AS est induit dans le circuit d'antenne AC par le champ magnétique. Le circuit d'horloge CKCT reçoit le signal d'antenne AS et en extrait un signal d'horloge externe CKe. Le signal d'horloge externe CKe est, en général, à la même fréquence que la fréquence porteuse.

L'oscillateur synchrone OSC reçoit le signal d'horloge externe CKe et fournit un signal d'horloge interne CKi. L'oscillateur synchrone OSC présente un mode de fonctionnement synchrone dans lequel la phase et la fréquence du signal d'horloge interne CKi sont asservis à ceux du signal d'horloge externe, et un mode de fonctionnement en oscillation libre dans lequel le signal d'horloge externe ne pilote plus l'oscillateur.

Lorsque le dispositif externe ED envoie des données DTr au circuit intégré 20, il module le champ magnétique au moyen d'un signal de modulation porteur de données MS(DTr). Puisque le signal d'antenne induit AS est l'image du champ magnétique, le signal de modulation porteur de données est également trouvé dans le signal d'antenne AS.

Le circuit de démodulation DMCT extrait du signal d'antenne AS le signal de modulation MS(DTr), et le fournit au circuit de décodage DCT. Le circuit de décodage DCT décode les données DTr et les fournit au processeur PRC.

Lorsque le circuit intégré 20 envoie des données DTx au dispositif externe ED, les données à envoyer DTx sont d'abord fournies au circuit de codage CCT et l'oscillateur synchrone OSC est placé en mode de fonctionnement en oscillation libre. Le circuit de codage CCT fournit un signal de modulation porteur de données MS(DTx) au circuit de modulation MCT.

Le circuit de modulation MCT combine le signal de modulation porteur de données MS(DTx) et le signal d'horloge interne CKi et fournit un signal de modulation de charge active LS au circuit d'antenne AC. Le signal de modulation de charge active LS comprend des salves du signal d'horloge interne CKi séparées par des périodes non modulées lors desquelles le signal LS présente une valeur par défaut. Par exemple, le circuit de modulation MCT fournit le signal d'horloge interne CKi comme signal de modulation LS lorsque MS(DTx)=1, et place sa sortie à 0 lorsque MS(DTx)=0. Ainsi, le signal LS est à 0 lorsque le signal MS(DTx) est à 0, et copie le signal Cki lorsque le signal MS(DTx) est à 1. Le circuit d'antenne AC reçoit ainsi des salves du signal d'horloge interne CKi et la bobine d'antenne 30 émet des salves correspondantes d'un champ magnétique. Ces salves de champ magnétique sont détectées par le dispositif externe ED comme une modulation de charge passive. Le dispositif ED extrait de sa bobine d'antenne AC2 le signal de modulation porteur de données MS(DTx), puis décode les données DTx envoyées par le circuit intégré 20.

Dans un mode de réalisation illustré par la figure 12, la bobine d'antenne de la carte NFSE est agencée de telle sorte que son axe magnétique MX présente un angle d'approximativement 45° (± 10°) par rapport à un axe longitudinal LX de la carte NFSE. Le mode de réalisation illustré par la figure 12 diffère de celui illustré par les figures 8 à 10 uniquement en ce que la bobine présente un axe magnétique MX formant un angle de 45° (± 10°) par rapport à un axe longitudinal LX de la carte NFSE. Si la carte présente une forme carrée, l'axe longitudinal LX peut être n'importe quel axe de la carte parallèle à un côté latéral de la carte.

Lorsque la carte NFSE est en cours d'utilisation après avoir été placée dans le connecteur de carte d'un dispositif portatif, elle est généralement à proximité d'une carte de circuit imprimé du dispositif, à une distance verticale ou "distance Z" de celle-ci, par rapport au plan XY de la carte de circuit imprimé. Une telle distance est généralement imprévisible pour le fabricant de carte en ce qui concerne la fabrication des cartes "génériques" (c'est-à-dire les cartes destinées à tout type de téléphone mobile). Cette distance Z dépend de la structure du dispositif et de l'emplacement du connecteur de carte. Le connecteur de carte peut être monté directement sur la carte de circuit imprimé ou agencé à plusieurs millimètres au-dessus. L'emplacement XY de la carte par rapport à la carte de circuit imprimé est également imprévisible, ainsi que l'orientation de l'axe magnétique MA de la bobine d'antenne 30 par rapport aux bords de la carte de circuit imprimé.

Dans ces conditions, des courants de Foucault apparaissent dans la carte de circuit imprimé lors d'une communication sans contact. De tels courants de Foucault tendent à neutraliser le champ magnétique émis par le dispositif externe ED en générant un contre-champ magnétique local induit en raison de la loi de Lenz. Ces courants de Foucault circulent en général à la périphérie de la carte de circuit imprimé et le contre-champ magnétique apparaît à proximité des bords de la carte de circuit imprimé.

Il peut être observé que lorsque la carte NFSE est agencée de telle sorte que la bobine d'antenne 30 soit à proximité de l'un des bords de la carte de circuit imprimé d'un téléphone mobile, son axe magnétique formant un angle de 45° avec le bord, et lorsque la distance Z est faible, la grandeur du contre-champ magnétique prévaut sur celle du champ magnétique externe et améliore la réception des données DTr envoyées par le dispositif externe ED. Par conséquent, le contre-champ magnétique est détecté par la bobine d'antenne 30 au lieu du champ magnétique original, permettant à la carte NFSE de recevoir des données du dispositif externe ED avec une meilleure distance de communication maximale. Si le coeur 31 de la bobine 30 est fait d'un matériau hautement perméable tel que la ferrite, le coeur concentre les lignes de champ magnétique et la distance de communication maximale en est d'autant plus augmentée.

Par ailleurs, il sera compris que la réception des données DTr envoyées par le dispositif externe ED serait améliorée davantage si l'axe magnétique de la bobine d'antenne formait un angle de 90° avec le bord de la PCB. Cependant, agencer la bobine d'antenne 30 de telle sorte que son axe magnétique MX forme approximativement un angle de 45° par rapport à l'axe longitudinal LX de la carte est un bon compromis en tenant compte du fait que la carte pourrait également être agencée perpendiculairement à ce bord.

Il apparaîtra clairement à l'homme de l'art que la présente invention est susceptible de diverses variantes de réalisation et diverses applications. En particulier, l'invention n'est pas limitée à une liaison filaire de type SWP entre la carte NFSE et le module NFCC, et au protocole de communication correspondant. L'invention n'est pas non plus limitée aux modes de réalisation de la carte présentés en figures 8 à 12, qui ne sont présentés qu'à titre d'exemple d'une carte intégrant sa propre bobine d'antenne. Au contraire, l'invention s'applique à toute carte susceptible d'être insérée dans un terminal tel qu'un téléphone mobile et présentant des interfaces de communication à contact et sans contact ou à champ proche.

L'invention n'est pas non plus limitée à un mode de réalisation de la carte dans lequel l'axe magnétique MX de la bobine d'antenne présente un angle de 45° ± 10° par rapport à l'axe longitudinal LX de la carte. Dans d'autres modes de réalisation, l'axe magnétique MX de la bobine d'antenne peut présenter un angle de 45° ± 25° par rapport à l'axe longitudinal de la carte, c'est-à-dire un angle compris entre 20° et 70°. De manière générale, les angles minimum et maximum entre l'axe magnétique MX et l'axe longitudinal LX peuvent être définis par des expériences, de telle sorte que la grandeur du contre-champ magnétique améliore la réception des données envoyées par le dispositif externe ED dans les deux agencements de la carte.

Par ailleurs, divers procédés connus dans le domaine de la fabrication de cartes à puce peuvent être utilisés pour fabriquer divers modes de réalisation d'une carte selon l'invention. Dans certains modes de réalisation, chaque écran conducteur peut être enchâssé dans le corps de la carte et peut s'étendre à proximité de la face inférieure ou de la face supérieure de la carte. La face supérieure et/ou la face inférieure de la carte peuvent ne pas être planaires. L'un et/ou l'autre des écrans peut être incurvé au lieu d'être planaire. Chacun des écrans peut s'étendre sur seulement une partie de la surface de la carte. La carte peut être alimentée par une batterie et donc peut ne pas avoir de plages de contact pour l'alimentation électrique de la carte. La carte peut également être purement passive et configurée pour envoyer des données par modulation de charge passive, et extraire une tension d'alimentation du champ magnétique émis par le dispositif NFC externe.

De plus, dans la présente description et les revendications, le terme "NFC" se réfère à tout type de communication sans contact effectuée par couplage inductif, quel que soit le protocole utilisé et la fréquence de fonctionnement. En outre, le terme "carte NFC" se réfère à tout type de support portatif présentant des capacités NFC.

## Revendications

1. Procédé de communication sans contact entre une carte NFC (NFSE) à double interface à contact (C6) et sans contact (CLI), installée dans un terminal de communication (HD2), et un dispositif NFC (ED) externe, le terminal comprenant un module NFC (NFCC) couplé à l'interface à contact de la carte et comportant une interface de communication sans contact (AC1), le procédé comprenant des étapes de:
détection par la carte (NFSE) de la présence du module NFC (NFCC) connecté à son interface à contact (C6),
sélection par la carte de l'une ou l'autre des interfaces à contact et sans contact de la carte, en fonction du résultat de la détection de la présence du module NFC, et
transmission de signaux entre la carte et le dispositif NFC externe par l'interface sélectionnée, et si l'interface à contact de la carte est sélectionnée, par l'interface sans contact (AC1) du module NFC,
**caractérisé en ce que** si l'interface à contact (C6) de la carte (NFSE) est sélectionnée, la carte garde active son interface sans contact (CLI) et reste à l'écoute de son interface sans contact pour pouvoir recevoir et utiliser des données échangées entre le module NFC du terminal et le dispositif NFC externe (ED).

2. Procédé selon la revendication 1, dans lequel l'interface à contact (C6) de la carte (NFSE) est couplée au module NFC (NFCC) par une liaison filaire de type SWP (B3), et la carte détecte la présence du module NFC connecté à son interface à contact en recevant un signal d'activation (ACS) du module NFC par la liaison filaire.

3. Procédé selon la revendication 2, dans lequel la carte (NFSE) active la liaison filaire (B3) en transmettant sur la liaison filaire au module NFC (NFCC), un signal de réponse (RS) au signal d'activation (ACS).

4. Procédé selon l'une des revendications 1 à 3, dans lequel, si la carte (NFSE) détecte la présence du module NFC (NFCC) connecté à son interface à contact (C6), la carte active une liaison filaire (B3) reliant son interface à contact au module NFC.

5. Procédé selon l'une des revendications 1 à 3, dans lequel, si la carte (NFSE) détecte la présence du module NFC (NFCC) connecté à son interface à contact (C6), la carte compare des données transmises au module NFC avec des données transmises par le module NFC vers un dispositif NFC externe (ED), et compare des données que lui transmet le module NFC avec des données émises par le dispositif NFC externe.

6. Procédé selon l'une des revendications 1 à 3, dans lequel, si la carte (NFSE) détecte la présence du module NFC (NFCC), la carte reçoit des données d'un dispositif NFC externe (ED), et si le module NFC ne lui transmet pas dans un premier délai (T3) les données reçues du dispositif externe, émet des données en réponse aux données reçues vers le dispositif NFC externe par son interface sans contact, et sinon, transmet les données en réponse au module NFC par son interface à contact (C6), le module NFC transmettant les données en réponse au dispositif NFC externe par son interface sans contact (AC1).

7. Procédé selon l'une des revendications 1 à 3, dans lequel, si la carte (NFSE) détecte la présence du module NFC (NFCC), la carte émet des données en réponse à des données reçues d'un dispositif NFC (ED) externe par son interface sans contact, tandis que le module NFC reste à l'écoute de son interface sans contact (AC1) pour transmettre les données reçues du dispositif NFC externe à la carte si la carte n'a pas émis de données en réponse au dispositif NFC dans un second délai (T4).

8. Procédé selon l'une des revendications 1 et 2, dans lequel, si la carte (NFSE) détecte la présence du module NFC (NFCC), la carte n'active pas la liaison filaire (B3), tandis que le module NFC retransmet des données reçues d'un dispositif NFC (ED) externe, à un processeur (BBP) du terminal (HD2), connecté au module NFC, et retransmet des données reçues du processeur au dispositif NFC.

9. Procédé selon l'une des revendications 1 et 2, dans lequel, si la carte (NFSE) détecte la présence du module NFC (NFCC), la carte n'active pas la liaison filaire (B3), et transmet des données par son interface sans contact au module NFC qui retransmet ces données à un processeur (BBP) du terminal connecté au module NFC, et le module NFC retransmet par son interface sans contact (AC1) à la carte, des données reçues du processeur.

10. Procédé selon l'une des revendications 1 à 9, dans lequel la carte (NFSE) comprend un circuit d'antenne (AC) comportant au moins une bobine d'antenne (30) présentant un axe magnétique (MA, MX), et au moins un écran électriquement conducteur (71, 73) s'étendant à proximité de la bobine d'antenne, l'axe magnétique de la bobine d'antenne étant sensiblement parallèle au plan de la carte et ne traversant pas chaque écran conducteur, et si la carte (NFSE) émet des données, elle émet des salves de champ magnétique à l'aide de la bobine d'antenne afin de compenser des effets négatifs de chaque écran conducteur sur la distance maximale de d'émission de données par modulation de charge.

11. Terminal comprenant un module NFC (NFCC) et une carte (NFSE) à double interface à contact (C6) et sans contact (CLI), le module NFC étant couplé à l'interface à contact de la carte et comportant une interface sans contact (AC1),
**caractérisé en ce que** le module NFC (NFCC) et la carte (NFSE) sont configurés pour mettre en oeuvre le procédé selon l'une des revendications 1 à 10.

12. Terminal selon la revendication 11, dans lequel la carte (NFSE) comprend un circuit d'antenne (AC) comprenant au moins une bobine d'antenne (30) présentant un axe magnétique (MA, MX), un circuit intégré (20) relié au circuit d'antenne, et au moins un écran électriquement conducteur (71, 73) s'étendant à proximité de la bobine d'antenne, l'axe magnétique (MA) de la bobine d'antenne étant sensiblement parallèle au plan de la carte, et ne traversant pas l'écran conducteur, aucun matériau magnétiquement perméable étant disposé entre l'écran conducteur et la bobine d'antenne.

13. Terminal selon la revendication 11 ou 12, dans lequel la carte (NFSE) comprend un circuit d'antenne (AC) comprenant au moins une bobine d'antenne (30) présentant un axe magnétique (MX), et un circuit intégré (20) relié au circuit d'antenne, l'axe magnétique de la bobine d'antenne étant sensiblement parallèle au plan de la carte, et formant un angle de 45° ± 25° par rapport à un axe longitudinal (LX) de la carte.

14. Terminal selon l'une des revendications 12 et 13, dans lequel le circuit d'antenne (AC) de la carte (NFSE) présente une fréquence d'accord qui a été réglée en présence de l'écran conducteur (71, 73), et qui ne se désaccorde pas lorsqu'un élément métallique est placé à proximité de l'écran conducteur.

15. Terminal selon l'une des revendications 12 et 14, dans lequel la bobine d'antenne (30) de la carte (NFSE) est enroulée autour d'un coeur magnétiquement perméable (31).

16. Terminal selon l'une des revendications 11 à 15, comprenant un processeur (BBP) relié à la carte (NFSE) par une liaison ISO 7816, la carte étant couplée au module NFC (NFCC) par une liaison SWP.

## Patentansprüche

1. Verfahren zur kontaktlosen Kommunikation zwischen einer in einem Kommunikationsendgerät (HD2) installierten NFC-Karte (NFSE) mit kontaktbehafteter (C6) und kontaktloser (CLI) Doppelschnittstelle und einer externen NFC-Vorrichtung (ED), wobei das Endgerät ein NFC-Modul (NFCC) umfasst, das mit der kontaktbehafteten Schnittstelle der Karte gekoppelt ist und eine kontaktlose Kommunikationsschnittstelle (AC1) aufweist, das Verfahren umfassend die folgenden Schritte:
anhand der Karte (NFSE), Erkennung der Anwesenheit des mit ihrer kontaktbehafteten Schnittstelle (C6) verbundenen NFC-Moduls (NFCC),
anhand der Karte, Auswahl von einer oder der anderen der kontaktbehafteten und kontaktlosen Schnittstellen der Karte nach dem Ergebnis der Erkennung der Anwesenheit des NFC-Moduls, und
Signalübertragung zwischen der Karte und der externen NFC-Vorrichtung über die ausgewählte Schnittstelle, und wenn die kontaktbehaftete Schnittstelle der Karte ausgewählt ist, dann über die kontaktlose Schnittstelle (AC 1) des NFC-Moduls,
**dadurch gekennzeichnet, dass**, wenn die kontaktbehaftete Schnittstelle (C6) der Karte (NFSE) ausgewählt ist, dann hält die Karte ihre kontaktlose Schnittstelle (CLI) aktiv und bleibt auf Empfang ihrer kontaktlosen Schnittstelle, um Daten empfangen und nutzen zu können, die zwischen dem NFC-Modul des Endgeräts und der externen NFC-Vorrichtung (ED) ausgetauscht werden.

2. Verfahren nach Anspruch 1, bei dem die kontaktbehaftete Schnittstelle (C6) der Karte (NFSE) mit dem NFC-Modul (NFCC) über eine Drahtverbindung vom Typ SWP (B3) gekoppelt ist, und die Karte die Anwesenheit des mit ihrer kontaktbehafteten Schnittstelle verbundenen NFC-Moduls erkennt, indem sie über die Drahtverbindung ein Aktivierungssignal (ACS) von dem NFC-Modul empfängt.

3. Verfahren nach Anspruch 2, bei dem die Karte (NFSE) die Drahtverbindung (B3) aktiviert, indem sie ein Antwortsignal (RS) in Antwort auf das Aktivierungssignal (ACS) an das NFC-Modul (NFCC) über die Drahtverbindung übermittelt.

4. Verfahren nach einem der Ansprüche 1 bis 3, bei dem, wenn die Karte (NFSE) die Anwesenheit des mit ihrer kontaktbehafteten Schnittstelle (C6) verbundenen NFC-Moduls (NFCC) erkennt, aktiviert die Karte eine Drahtverbindung (B3), die ihre kontaktbehaftete Schnittstelle mit dem NFC-Modul verbindet.

5. Verfahren nach einem der Ansprüche 1 bis 3, bei dem, wenn die Karte (NFSE) die Anwesenheit des mit ihrer kontaktbehafteten Schnittstelle (C6) verbundenen NFC-Moduls (NFCC) erkennt, dann macht die Karte einen Vergleich zwischen an das NFC-Modul übermittelten Daten und von dem NFC-Modul an eine externe NFC-Vorrichtung (ED) übermittelten Daten, und einen Vergleich zwischen ihr von dem NFC-Modul übermittelten Daten und von der externen NFC-Vorrichtung gesendeten Daten.

6. Verfahren nach einem der Ansprüche 1 bis 3, bei dem, wenn die Karte (NFSE) die Anwesenheit des NFC-Moduls (NFCC) erkennt, dann empfängt die Karte Daten aus einer externen NFC-Vorrichtung (ED), und wenn das NFC-Modul ihr die aus der externen Vorrichtung empfangenen Daten nicht innerhalb einer ersten Frist (T3) übermittelt, dann sendet sie Antwort-Daten in Antwort auf die empfangenen Daten an die externe NFC-Vorrichtung über ihre kontaktlose Schnittstelle, und sonst, übermittelt sie die Antwort-Daten an das NFC-Modul über ihre kontaktbehaftete Schnittstelle (C6), wobei das NFC-Modul die Antwort-Daten an die externe NFC-Vorrichtung über seine kontaktlose Schnittstelle (AC1) übermittelt.

7. Verfahren nach einem der Ansprüche 1 bis 3, bei dem, wenn die Karte (NFSE) die Anwesenheit des NFC-Moduls (NFCC) erkennt, dann sendet die Karte Daten in Antwort auf aus einer externen NFC-Vorrichtung (ED) empfangene Daten über ihre kontaktlose Schnittstelle, während das NFC-Modul auf Empfang seiner kontaktlosen Schnittstelle (AC1) bleibt, um die aus der externen NFC-Vorrichtung empfangenen Daten an die Karte zu übermitteln, wenn die Karte keine Daten in Antwort auf die NFC-Vorrichtung innerhalb einer zweiten Frist (T4) gesendet hat.

8. Verfahren nach einem der Ansprüche 1 und 2, bei dem, wenn die Karte (NFSE) die Anwesenheit des NFC-Moduls (NFCC) erkennt, dann aktiviert die Karte die Drahtverbindung (B3) nicht, während das NFC-Modul aus einer externen NFC-Vorrichtung (ED) empfangene Daten an einen Prozessor (BBP) des mit dem NFC-Modul verbundenen Endgeräts (HD2) weiterleitet, und aus dem Prozessor empfangene Daten an die NFC-Vorrichtung weiterleitet.

9. Verfahren nach einem der Ansprüche 1 und 2, bei dem, wenn die Karte (NFSE) die Anwesenheit des NFC-Moduls (NFCC) erkennt, dann aktiviert die Karte die Drahtverbindung (B3) nicht, und übermittelt Daten über ihre kontaktlose Schnittstelle an das NFC-Modul, das diese Daten an einen Prozessor (BBP) des mit dem NFC-Modul verbundenen Endgeräts weiterleitet, und weiterleitet das NFC-Modul aus dem Prozessor empfangene Daten an die Karte über seine kontaktlose Schnittstelle (AC1).

10. Verfahren nach einem der Ansprüche 1 bis 9, bei dem die Karte (NFSE) einen Antennenkreis (AC) umfasst, der wenigstens eine Antennenspule (30) mit einer Magnetachse (MA, MX) aufweist, und wenigstens eine elektrisch leitende, sich in der Nähe der Antennenspule erstreckende Abschirmung (71, 73), wobei die Magnetachse der Antennenspule im Wesentlichen parallel zur Kartenebene ist und jede leitende Abschirmung nicht durchquert, und wenn die Karte (NFSE) Daten sendet, dann sendet sie Magnetfeldbursts anhand der Antennenspule, um negative Wirkungen jeder leitenden Abschirmung auf die maximale Entfernung der Datenübertragung durch Lastmodulation auszugleichen.

11. Endgerät umfassend ein NFC-Modul (NFCC) und eine Karte (NFSE) mit kontaktbehafteter (C6) und kontaktloser (CLI) Doppelschnittstelle, wobei das NFC-Modul mit der kontaktbehafteten Schnittstelle der Karte gekoppelt ist und eine kontaktlose Schnittstelle (AC1) aufweist,
**dadurch gekennzeichnet, dass** das NFC-Modul (NFCC) und die Karte (NFSE) dazu konfiguriert sind, das Verfahren nach einem der Ansprüche 1 bis 10 zu implementieren.

12. Endgerät nach Anspruch 11, bei dem die Karte (NFSE) einen wenigstens eine Antennenspule (30) mit einer Magnetachse (MA, MX) aufweisenden Antennenkreis (AC), eine mit dem Antennenkreis verbundene integrierte Schaltung (20), und wenigstens eine elektrisch leitende, sich in der Nähe der Antennenspule erstreckende Abschirmung (71, 73) umfasst, wobei die Magnetachse (MA) der Antennenspule im Wesentlichen parallel zur Kartenebene ist und die leitende Abschirmung nicht durchquert, wobei kein magnetisch permeables Material zwischen der leitenden Abschirmung und der Antennenspule angeordnet ist.

13. Endgerät nach Anspruch 11 oder 12, bei dem die Karte (NFSE) einen wenigstens eine Antennenspule (30) mit einer Magnetachse (MX) umfassenden Antennenkreis (AC) und eine mit dem Antennenkreis verbundene integrierte Schaltung (20) umfasst, wobei die Magnetachse der Antennenspule im Wesentlichen parallel zur Kartenebene ist, und einen Winkel von 45° ± 25° im Verhältnis zu einer Längsachse (LX) der Karte bildet.

14. Endgerät nach einem der Ansprüche 12 und 13, bei dem der Antennenkreis (AC) der Karte (NFSE) eine Abstimmfrequenz aufweist, die in Anwesenheit der leitenden Abschirmung (71, 73) eingestellt wurde, und die sich nicht verstimmt, wenn ein metallisches Element in der Nähe der leitenden Abschirmung steht.

15. Endgerät nach einem der Ansprüche 12 und 14, bei dem die Antennenspule (30) der Karte (NFSE) um einen magnetisch permeablen Kern (31) gewickelt ist.

16. Endgerät nach einem der Ansprüche 11 bis 15, umfassend einen mit der Karte (NFSE) über eine ISO 7816-Verbindung verbundenen Prozessor (BBP), wobei die Karte mit dem NFC-Modul (NFCC) über eine SWP-Verbindung gekoppelt ist.

## Claims

1. A contactless communication method between an NFC card (NFSE) with a contact (C6) and contactless (CLI) dual interface, installed in a communication terminal (HD2), and an external NFC device (ED), the terminal comprising an NFC module (NFCC) coupled to the contact interface of the card and comprising a contactless communication interface (AC1), the method comprising steps of:
detecting by the card (NFSE) the presence of the NFC module (NFCC) connected to its contact interface (C6),
selecting by the card one or the other of the contact and contactless interfaces of the card, depending on the result of the detection of the NFC module presence, and
transmitting signals between the card and the external NFC device by the selected interface, and if the contact interface of the card is selected, by the contactless interface (AC1) of the NFC module,
**characterized in that**, if the contact interface (C6) of the card (NFSE) is selected, the card keeps its contactless interface (CLI) active and continues to monitor its contactless interface to be able to receive and use data exchanged between the NFC module of the terminal and the external NFC device (ED).

2. Method according to claim 1, wherein the contact interface (C6) of the card (NFSE) is coupled to the NFC module (NFCC) by a wire link of SWP type (B3), and the card detects the presence of the NFC module connected to its contact interface by receiving an activation signal (ACS) for activating the NFC module through the wire link.

3. Method according to claim 2, wherein the card (NFSE) activates the wire link (B3) by transmitting on the wire link to the NFC module (NFCC), a response signal (RS) in response to the activation signal (ACS).

4. Method according to one of claims 1 to 3, wherein, if the card (NFSE) detects the presence of the NFC module (NFCC) connected to its contact interface (C6), the card activates a wire link (B3) linking its contact interface to the NFC module.

5. Method according to one of claims 1 to 3, wherein, if the card (NFSE) detects the presence of the NFC module (NFCC) connected to its contact interface (C6), the card compares data transmitted to the NFC module with data transmitted by the NFC module to an external NFC device (ED) and compares data that the NFC module transmits to it with data emitted by the external NFC device.

6. Method according to one of claims 1 to 3, wherein, if the card (NFSE) detects the presence of the NFC module (NFCC), the card receives data from an external NFC device (ED), and if the NFC module does not transmit the data received from the external device to it within a first time (T3), it emits data in response to the data received to the external NFC device through its contactless interface, and otherwise, it transmits the data in response to the NFC module through its contact interface (C6), the NFC module transmitting the data in response to the external NFC device through its contactless interface (AC1).

7. Method according to one of claims 1 to 3, wherein, if the card (NFSE) detects the presence of the NFC module (NFCC), the card emits data in response to data received from an external NFC device (ED) through its contactless interface, while the NFC module continues to monitor its contactless interface (AC1) to transmit the data received from the external NFC device to the card if the card did not emit data in response to the NFC device within a second time (T4).

8. Method according to one of claims 1 and 2, wherein, if the card (NFSE) detects the presence of the NFC module (NFCC), the card does not activate the wire link (B3) while the NFC module forwards data received from an external NFC device (ED), to a processor (BBP) of the terminal (HD2), connected to the NFC module, and forwards data received from the processor to the NFC device.

9. Method according to one of claims 1 and 2, wherein, if the card (NFSE) detects the presence of the NFC module (NFCC), the card does not activate the wire link (B3) and transmits data through its contactless interface to the NFC module which forwards this data to a processor (BBP) of the terminal connected to the NFC module, and the NFC module forwards through its contactless interface (AC1) to the card, data received from the processor.

10. Method according to one of claims 1 to 9, wherein the card (NFSE) comprises an antenna circuit (AC) comprising at least one antenna coil (30) having a magnetic axis (MA, MX), and at least one electrically conductive screen (71, 73) extending near the antenna coil, the magnetic axis of the antenna coil being substantially parallel to the plane of the card and not crossing each conductive screen, and if the card (NFSE) emits data, it emits bursts of magnetic field by means of the antenna coil so as to compensate for negative effects of each conductive screen on the maximum distance for transmitting data by load modulation.

11. A terminal comprising an NFC module (NFCC) and a card (NFSE) with contact (C6) and contactless (CLI) dual interface, the NFC module being coupled to the contact interface of the card and comprising a contactless interface (AC1),
**characterized in that** the NFC module (NFCC) and the card (NFSE) are configured to implement the method of one of claims 1 to 10.

12. Terminal according to claim 11, wherein the card (NFSE) comprises an antenna circuit (AC) comprising at least one antenna coil (30) having a magnetic axis (MA, MX), an integrated circuit (20) connected to the antenna circuit, and at least one electrically conductive screen (71, 73) extending near the antenna coil, the magnetic axis (MA) of the antenna coil being substantially parallel to the plane of the card, and not crossing the conductive screen, no magnetically permeable material being arranged between the conductive screen and the antenna coil.

13. Terminal according to claim 11 or 12, wherein the card (NFSE) comprises an antenna circuit (AC) comprising at least one antenna coil (30) having a magnetic axis (MX), and an integrated circuit (20) connected to the antenna circuit, the magnetic axis of the antenna coil being substantially parallel to the plane of the card and forming an angle of 45° ± 25° in relation to a longitudinal axis (LX) of the card.

14. Terminal according to one of claims 12 and 13, wherein the antenna circuit (AC) of the card (NFSE) has a tuning frequency which has been set in the presence of the conductive screen (71, 73), and which does not detune when a metal element is placed near the conductive screen.

15. Terminal according to one of claims 12 and 14, wherein the antenna coil (30) of the card (NFSE) is wound around a magnetically permeable core (31).

16. Terminal according to one of claims 11 to 15, comprising a processor (BBP) connected to the card (NFSE) by a link ISO 7816, the card being coupled to the NFC module (NFCC) by an SWP link.
